# EUROPEAN PATENT SPECIFICATION

(11) **EP 4 383 491 B1**
(45) Date of publication and mention of the grant of the patent: **06.05.2026**
(21) Application number: 23214580.5
(22) Date of filing: 06.12.2023
(51) Int. Cl.: H02G 15/105, H01R 11/01, H01R 13/514, H01R 13/6581, H02H 9/04

(54) **SECTIONING, GROUNDING, AND SHIELDING BOX WITHOUT GROUNDING OF THE SCREENING OF THE CABLES OF A HIGH VOLTAGE THREE-PHASE ELECTRICAL CIRCUIT IN ALTERNATED CURRENT**
TRENN-, ERDUNGS- UND ABSCHIRMKASTEN OHNE ERDUNG DER ABSCHIRMUNG DER KABEL EINER DREIPHASENHOCHSPANNUNGSSCHALTUNG IN WECHSELSTROM
BOÎTE DE SECTIONNEMENT, MISE À LA TERRE ET DE BLINDAGE SANS MISE À LA TERRE DU BLINDAGE DES CÂBLES D'UN CIRCUIT ÉLECTRIQUE TRIPHASÉ HAUTE TENSION EN COURANT ALTERNÉ

(30) Priority: 09.12.2022 IT 202200025299
(43) Date of publication of application: 12.06.2024
(73) Proprietor: C&G Agency GmbH, 8004 Zurich (CH)
(72) Inventor: Gabbani, Simona, 53179 Bonn (DE)
(74) Representative: Rapisardi, Mariacristina

(56) References cited:
- EP-A1- 4 060 842
- WO-A1-2016/008542
- CN-U- 203 522 110
- US-A1- 2022 166 199

## Description

The present invention relates to a sectioning box of the cable shielding of a three-phase high voltage (HV) alternating current (AC) electric circuit .

As is well known, the shield of each phase cable is electrically connected, upstream and downstream of its sectioning point, to a first conductor and a second conductor arranged inside each other in a bonding cable entering the sectioning box.

In three-phase high-voltage (HV) alternating current (AC) circuits, the shields in the cables for conveying fault currents can be connected together in various configurations in order to minimise induced circulating currents.

In the case of cross-bonding or middle point bonding circuits, the shields are accessible along the cable route, in the vicinity of the joints, in the aforementioned sectioning boxes.

Sectioning boxes can typically be of direct earthing, cross-bonding and ungrounded screen continuity.

These configurations are usually achieved either with the same boxes, but with different internal configurations, or with boxes of different construction.

The different construction may be dictated by economic considerations, as the direct earthing box may be more compact than the others since it does not have to house arresters (and thus not subject to potential explosions) and does not have to provide earth insulation.

Inside the boxes, the insulation of the bonding cable, which, as mentioned above, is the cable connected directly to the shield of the HV cable near the j oint, is removed, exposing the conductor. This conductor can reach significant voltage levels and in the event of a fault even hundreds of kV. For this reason, boxes of the known type, which are typically insulated from cable conductors in the air, have important dimensions to ensure that there are no discharges in the air between conductors at different potentials.

Inside the box, if it is not a direct earthing box, there are so-called Surge Voltage Limiters (or SVL). Surge voltage limiters are non-linear resistive elements whose function is to keep the voltages induced in the shields below a certain value which, if exceeded, could lead to perforation of the insulating sheath. When the voltage level characteristic of the specific limiter is exceeded, this passive element, normally an insulator, becomes conductive by connecting the screen to earth potential, preventing discharge and thus perforation of the bonding cable insulation.

Every time the limiter becomes conductive, permanent conductive carbon channels are created in it, which reduce the level of insulation provided by the insulator. These channels represent a kind of ageing of the limiter which, over time, could lead to the limiter exploding in the presence of overvoltage. For this reason, the sectioning boxes are dimensioned and tested to withstand the explosion of one or more limiters.

These components, the limiters, should be tested periodically. The testing of these elements can require long, and therefore normally costly, out-of-service times.

Finally, another characteristic that these boxes must have is airtightness. Sectioning boxes are typically located below street level and are therefore subject to more or less frequent immersion. It is an absolute priority to ensure the airtightness of the box, as the ingress of water could cause a short circuit between the conductors of the bonding cables stripped of their insulation.

In addition, any water that might seep into the box could back up between the wires of the bonding cables, reaching the AT coupling and causing further problems and malfunctions.

For the above reasons, sectioning boxes are normally particularly large (to ensure separation between conductors without insulation), metallic and with numerous locking bolts to prevent water ingress and to resist possible explosions of the limiters. These characteristics make them particularly heavy and require at least two operators to position and install them.

Although the boxes may be initially configured at the factory, after installation, tests must be carried out on the cables before commissioning. Such tests require temporarily changing the configuration of the boxe's internal connections and then resetting them. During these operations, the connections may not be restored correctly, causing malfunctions in the AT circuit.

In cable shields, residual induced currents normally circulate, which could not be completely eliminated by transposition. In the event of perforation of the cable's insulating sheath, the screen may find itself electrically connected directly to earth. Such an alteration of the original earthing pattern of the screens encourages the circulation of more or less high levels of unwanted induced currents. Monitoring these currents is an indirect measure of the condition of the cable's insulating sheath. These currents have the same frequency as the phase current.

Currents generated by partial discharges also circulate in the shields themselves. Partial discharges are undesirable effects in high-voltage circuits because they can lead to ageing of the insulation, which can ultimately result in an explosion. Such currents are high-frequency. Monitoring them can allow an analysis of the state of integrity of the circuit insulation and the correct installation of accessories.

Being able to equip screens with sensors to detect changes in induced screen currents and high-frequency partial discharge currents is a valuable way of monitoring important functional characteristics of the AC circuit.

The insertion of such sensors inside the boxes on existing circuits is not possible because it would change the isolation distances in air; therefore, these sensors are typically housed around the bonding cables before they enter the box.

The construction of the box is certified through electrical, immersion and burst tests, and modifications that risk changing its performance are subject to new long and costly test cycles and subsequent certification.

It must be borne in mind that any intervention on the boxes requires a so-called network outage: the circuit must be de-energised and thus the power transmission interrupted. This outage represents a loss of income on the part of the network operator and must therefore be kept to a minimum.

WO2016008542A1, EP4060842A1, US2022166199A1 and CN203522110U depict the state of the art of the present invention.

The technical task that the present invention proposes is, therefore, to realise a cable shield sectioning box for a three-phase high-voltage alternating current electric circuit that eliminates the complained of technical drawbacks of the known technique.

In the context of this technical task, one aim of the invention is to realise a sectioning box that is compact, light, easy to assemble, configure and maintain.

Another purpose of the invention is to realise a sectioning box with increased functionality.

The technical task, as well as these and other purposes, according to the present invention are achieved by realizing a cable shield sectioning box according to claim 1. Other features are defined in the subsequent claims.

The sectioning box object of the invention achieves the following advantages over traditional devices.

Its special construction is more compact: the insulation between conductors of different potential is not in air, but is provided by a solid dielectric and/or gel.

Its special construction is lighter and allows installation by one person.

Its special modular construction always includes a head and a tail module, and between them several modules fulfilling different functions can be inserted. The modules can be easily inserted by a single operator.

Its special construction requires less assembly and configuration of the box, resulting in a reduced possibility of incorrect connections.

Its special construction simplifies maintenance: if elements within the individual module fail, the entire module can be quickly replaced with a new one, minimising downtime.

In addition, inspection times are reduced, e.g. the time required to check the condition of unloaders, if any.

Partial discharge sensors are more sensitive since they are installed on each individual conductor of the bonding cable.

The source of partial discharges can be more easily located without the need for an outage thanks to the positioning of sensors on each individual conductor of the bonding cable.

The modular sectioning box can be pre-assembled and pre-tested for partial discharge monitoring. The modular sectioning box can be pre-assembled and pretested for monitoring screen currents. The modular sectioning box can be pre-assembled and pre-tested for the implementation of screen transposition.

The modular sectioning box can be pre-assembled and pre-tested for direct grounding of screens. The modular isolating box can be pre-assembled and pre-tested for ground isolation by means of limiters.

The modular sectioning box can be pre-assembled and pre-tested for converting circulating screen voltage and/or currents into power for supplying sensors or active circuitry.

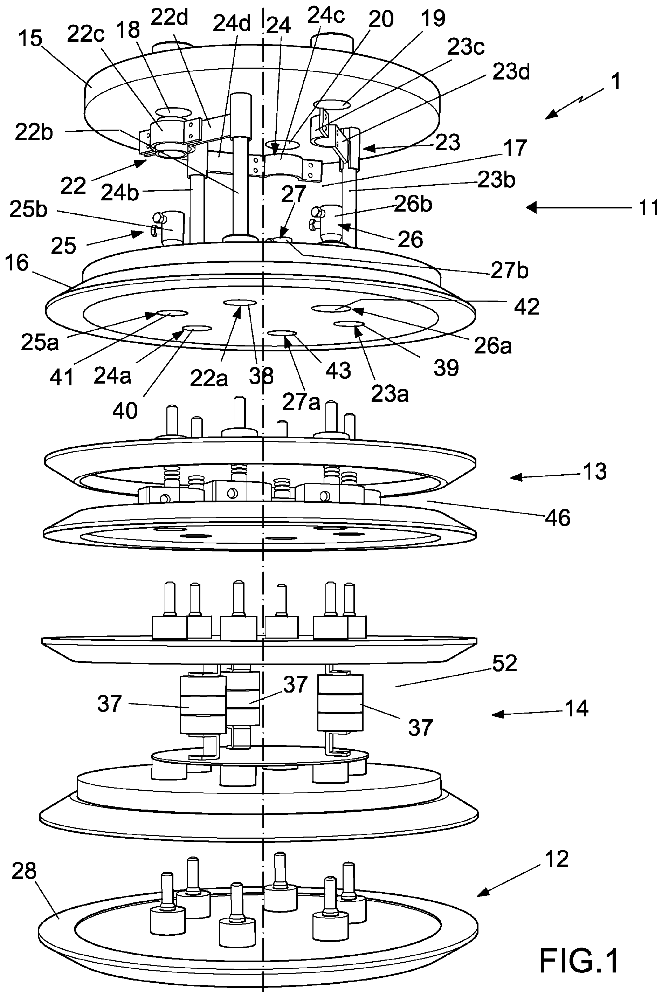

Further features and advantages of the invention will become more apparent from the description of a preferred but not exclusive form of execution of the cable shield sectioning box of a three-phase high-voltage AC electric circuit according to the invention, illustrated by way of illustration and not limitation in the accompanying drawings, in which
Figure 1 shows an exploded view of the modular box;
Figure 2 shows a detail of the exploded tail module;
Figure 3 shows a detail of an exploded intermediate module;

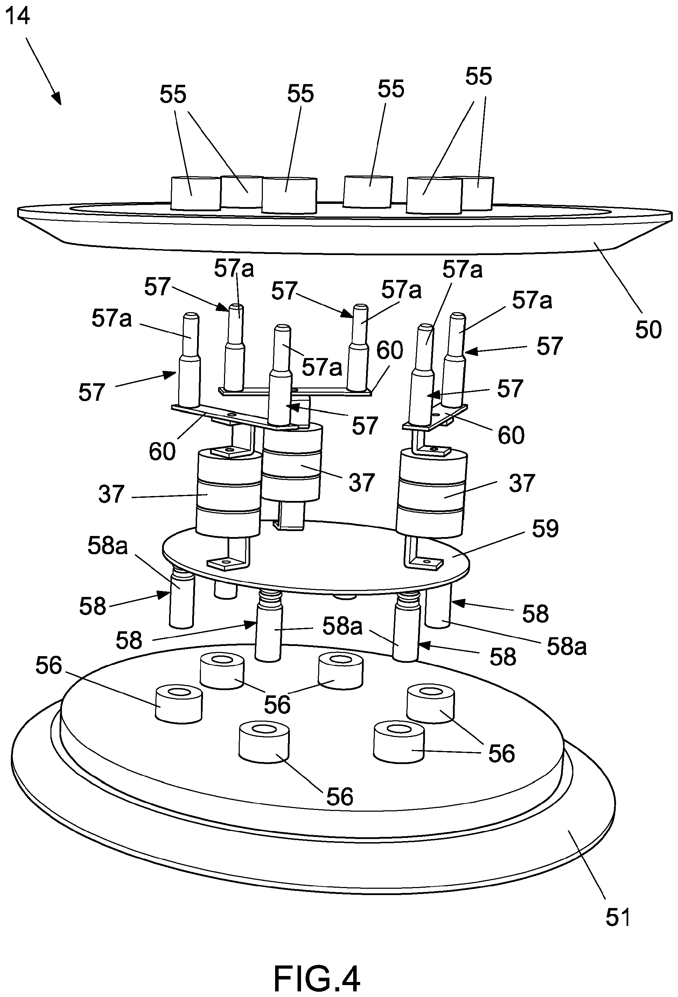

Figure 4 shows a detail of a further exploded intermediate module;

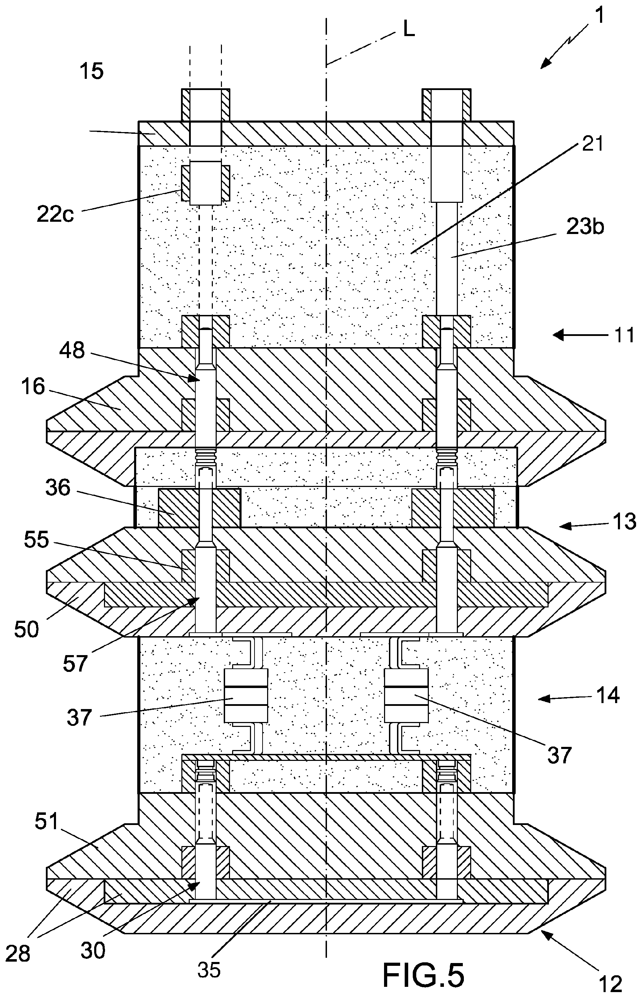

Figure 5 shows the assembled box in section; and

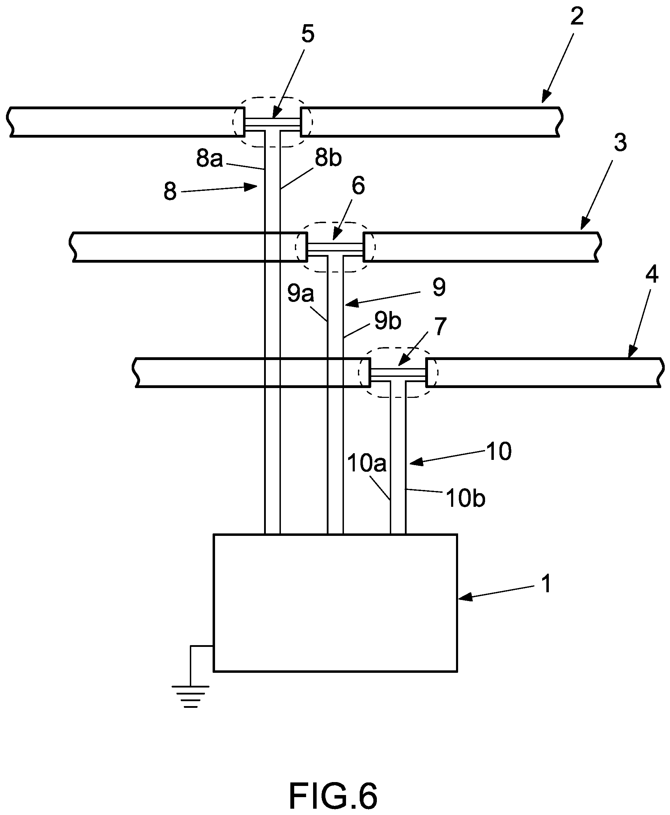

Figure 6 shows a three-phase circuit diagram with an attached isolating box.

With reference to the above-mentioned figures, a cable shield sectioning box of a three-phase high-voltage AC electric circuit is shown, indicated overall by reference number 1.

The three-phase high-voltage AC electrical circuit in known mode comprises cables 2, 3, 4 each with a shield.

Each cable 2, 3 4 has a respective junction 5, 6, 7 and at junction 5, 6, 7 the shield of cable 2, 3, 4 is electrically connected, upstream and downstream of its sectioning point, to a first conductor 8a, 9a, 10a and a second conductor 8b, 9b, 10b arranged within each other in a bonding cable 8, 9, 10 connected to the disconnection box 10.

Sectioning box 1 has a modular construction 11, 12, 13, 14 comprising at least one head module 11 and one tail module 12.

The modular modules 11, 12, 13, 14 are electrically interconnected, as we shall see in more detail below, by means of male/female electrical interconnection systems (so-called 'pin and socket'). Sectioning box 1 comprises at least one head module 11 and one tail module 12, but, being modular, its construction can be expanded.

The head module 11 comprises a front head flange 15 and a rear head flange 16 separated in the direction of an L-axis of the head module 11 by a gap 17 where a dielectric filling material 21 is present.

The dielectric filling material 21 can be in solid or gel form.

The head module 11 provides, for each bonding cable 8, 9, 10, a respective through-hole 18, 19, 20 for access to the gap 17.

Access holes 18, 19, 20 are through the front head flange 15 of head module 11.

The head module 11 also provides, for each bonding cable 8, 9, 10, a respective pair of electrical connectors.

The electrical connector pair comprises a first electrical connector 22, 23, 24 of the outer conductor 8a, 9a, 10a of the bonding cable 8, 9, 10, and a second electrical connector 25, 26, 27 of the inner conductor 8b, 9b, 10b of the bonding cable 8, 9, 10.

The first electrical connector 22, 23, 24 and the second electrical connector 25, 26, 27 are incorporated in the dielectric filling material 21.

In addition, the first electrical connector 22, 23, 24 and the second electrical connector 25, 26, 27 have respective terminals 22a, 25a, 23a, 26a, 24a, 27a extending into respective through holes 38, 39, 40, 41, 42, 43 of the rear head flange 16 of the head module 11.

The arrangement of the electrical connector pairs of head module 11 is symmetrical to the L-axis of head module 11.

In particular, terminals 22a, 25a, 23a, 26a, 24a, 27a are arranged at the vertices of a hexagon having its centre on the L-axis.

The terminals 22a, 25a, 23a, 26a, 24a, 27a of the first electrical connector 22, 23, 24 and the second electrical connector 25, 26, 27 in the case shown, are all female.

The first electrical connector 22, 23, 24 comprises a structural conductor element 22b, 23b, 24b of mechanical connection between the front head flange 15 and the rear head flange 16 of the head module 11.

The structural conductor element 22b, 23b, 24b extends in direction of the axis L of the head module 11 and has an end fixed to the front head flange 15 and an opposite end fixed to the rear head flange 16 of the head module 11.

The first electrical connector 22, 23, 24 also comprises a first bush 22c, 23c, 24c coaxial to the through-hole 18, 19, 20 and a transverse arm 22d, 23d, 24d connecting the first bush to the structural conductor element 22b, 23b, 24b.

The first bush 22c, 23c, 24c and the transverse arm 22d, 23d, 24d have a separation distance in the direction of the L axis of the head module 11 from the front head flange 15.

The transverse arm 22d, 23d, 24d is more precisely orthogonal to the structural conductor element 22b, 23b, 24b.

The transverse arm 22d, 23d, 24d is formed of a metal foil or other conductive element.

The structural conductor element 22b, 23b, 24b, at the end opposite the one connected to the transverse arm 22d, 23d, 24d , is obviously connected to the terminal 22a, 23a, 24a of the first electrical connector 22, 23, 24.

The first bush 22c, 23c, 24c, the transverse arm 22d, 23d, 24d, and the structural conducting element 22b, 23b, 24b of the first electrical connector 22,2 3, 24 are integrally incorporated in the dielectric filling material 21.

The second electrical connector 25, 26, 27 comprises a second bush 25b, 26b, 27b coaxial to the first bush 22c, 23c, 24c.

The second bush 25b, 26b, 27b is integrally incorporated in the dielectric filling material 21 and is obviously connected to the terminal 25a, 26a, 27a of the second electrical connector 25, 26, 27. The front head flange 15 and the rear head flange 16 of the head module 11 are in the form of parallel discs orthogonally connected by the structural conductor element 22b, 23b, 24b of each pair of electrical connectors of the head module 11.

In practice, each bonding cable 8, 9, 10 has the end of the first conductor 8a, 9a, 10a, particularly the outer conductor, clamped in the first bush 22c, 23c, 24c, and the end of the second conductor 8b, 9b, 10b, particularly the inner conductor, clamped in the second bush 25b, 26b, 27b.

Tail module 12 includes a flange 28 fitted with electrical connectors 29, 30, 31, 32, 33, 34.

The terminals 29a, 30a, 31a, 32a, 33a, 34a of the electrical connectors 29, 30, 31, 32, 33, 34 provided in the tail module 12 are of the opposite type to the terminals 22a, 25a, 23a, 26a, 24a, 27a of the electrical connectors 22, 23, 24, 25, 26, 27 provided in the head module 11, in the case illustrated as an example they are of the male type since those provided in the head module 11 are of the female type.

Flange 28 of tail module 12 is formed by a disc coaxial to the L-axis of head module 11.

Flange 28 of tail module 12 and rear flange 16 of head module 11 can be KF type.

In the basic, not shown version of the modular sectioning box 1, where only the head module 11 and the tail module 12 are electrically connected, the terminals 29a, 30a, 31a, 32a, 33a, 34a of the electrical connectors 29, 30, 31, 32, 33, 34 of the tail module 12 actually engage with the corresponding terminals 22a, 25a, 23a, 26a, 24a, 27a of the electrical connectors 22a, 25a, 23a, 26a, 24a, 27a of the head module 11.

If, as illustrated, one or more intermediate modules 13, 14 are provided instead, the electrical connectors 29, 30, 31, 32, 33, 34 of the tail module 12 electrically connect the tail module 12 to the adjacent intermediate module 14.

The electrical connectors 29, 30, 31, 32, 33, 34 of the tail module 12 are short-circuited for the grounding of the coaxial cables 8a, 8b, 9a, 9b, 10a, 10b by at least one short-circuiting element 35. The short-circuiting element 35 can be a metal plate incorporated in the flange 28 of the tail module 12.

The modular modules 11, 12, 13, 14 that form sectioning box 1 may additionally include, as illustrated, one or more intermediate modules 13, 14 interposed between the head module 11 and the tail module 12 and designed to increase the functionality of sectioning box 1.

In particular, an intermediate module 13 may have elements 36 which may be formed of partial discharge sensors or screen currents along conductors 8a, 9a, 10a, 8b, 9b, 10b of the bonding cables 8, 9 10 or electrical energy recuperators from conductors 8a, 9a, 10a, 8b, 9b, 10b of the bonding cables 8, 9 10.

Partial discharge or screen current sensors may include e.g. HFCT or Rogowsky sensors.

The intermediate module 13 is formed of a front flange 44 and a rear flange 45 separated by a gap 46 presenting a dielectric filling material 47 in solid or gel form where the elements 36 are incorporated.

The front flange 44 and the rear flange 45 of the intermediate module 13 have coaxial through-holes where opposite type terminals of electrical connectors 48 are extended through the gap 46. Obviously, an electrical connector 48 is provided for each conductor 8a, 9a, 10a, 8b, 9b, 10b of each bonding cable 8, 9, 10 and a corresponding element 36 is coupled to each electrical connector 48.

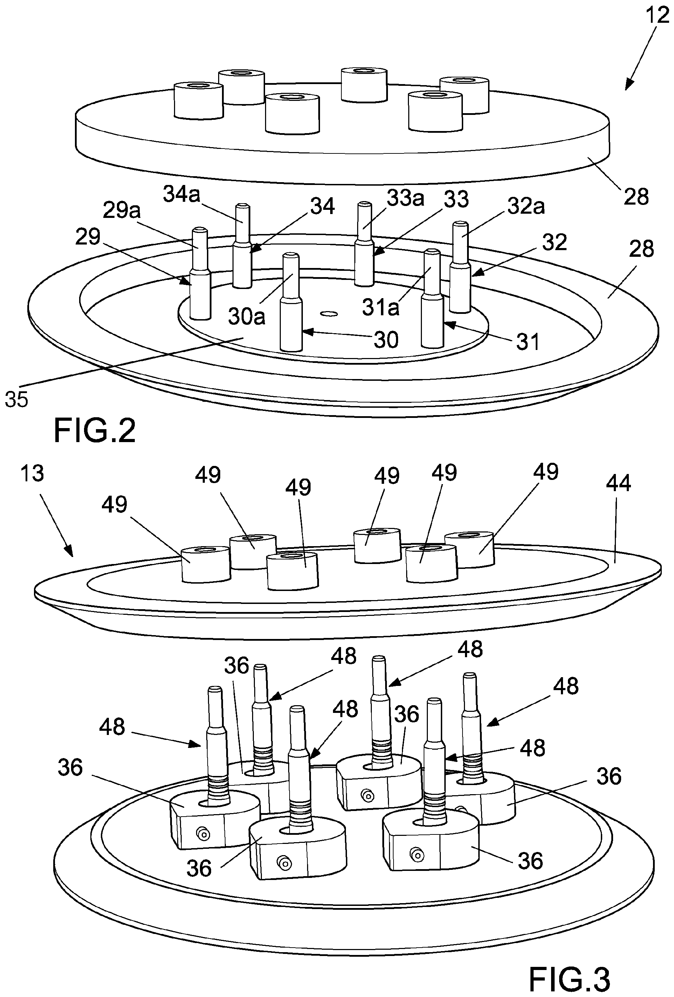

In figure 3, only holes 49 of the front flange 44 of the intermediate module 13 are visible.

The opposite type terminals of the electrical connectors 48 are configured and arranged to connect with the corresponding terminals of the electrical connectors of the adjacent modules, which may in turn be two intermediate modules or one intermediate module and the head module 11, or one intermediate module and the tail module 12.

Again, the front flange 44 and the rear flange 45 of intermediate module 13 can be of type KF.

Finally, an intermediate module 14 may have surge voltage limiters 37 from conductors 8a, 9a, 10a, 8b, 9b, 10b of the bonding cables 8, 9, 10.

Similarly to the intermediate module 13 described above, the intermediate module 14 is formed of a front flange 50 and a rear flange 51 separated by a gap 52 presenting a dielectric filling material 53 in solid or gel form in which the surge voltage limiters 37 are incorporated.

The front flange 50 and the rear flange 51 of the intermediate module 14 have coaxial through-holes 55 and respectively 56 where terminals 57a and respectively 58a of opposite type of electrical connectors 57 and respectively 58 are extended.

Obviously, there is one electrical connector 57 and one electrical connector 58 for each bonding conductor 8a, 9a, 10a, 8b, 9b, 10b of each bonding cable 8, 9, 10.

The electrical connectors 58 are short-circuited within the gap 52 by a short-circuiting element 59, particularly in the shape of a plate, on which are mounted the limiters 37 connected to the electrical connectors 57 which are in turn short-circuited in pairs via bridges 60.

The opposite type terminals 57a and respectively 58a of the electrical connectors 57 and respectively 58 are configured and arranged to connect with the corresponding terminals of the electrical connectors of the adjacent modules, which may in turn be two intermediate modules or one intermediate module and the head module 11, or one intermediate module and the tail module 12.

Again, the front flange 50 and rear flange 51 of intermediate module 14 can be KF type.

The cable shield sectioning box of a three-phase high-voltage AC circuit thus conceived is susceptible to numerous modifications and variants, all within the scope of the inventive concept; moreover, all details can be replaced by technically equivalent elements.

In practice, the materials used, as well as the dimensions, can be any according to requirements and the state of the art.

## Claims

1. A sectioning box (1) suitable for sectioning a cable shielding (2, 3, 4) of a three-phase high voltage electric circuit in alternating current, where the shielding of each cable (2, 3, 4) is electrically connected, upstream and downstream of its sectioning point, to a first conductor (8a, 9a, 10a) and respectively to a second conductor (8b, 9b, 10b) arranged inside each other in a bonding cable (8, 9, 10), wherein it has modular modules (11, 12, 13, 14), electrically connected by means of male/female electrical interconnection systems, comprising at least one head module (11) and one tail module (12), where the head module (11) comprises a front head flange (15) and a rear head flange (16) separated in the direction of an axis (L) of the head module (11) by a gap (17) having a dielectric filling material (21) in solid or gel form, where for each bonding cable (8, 9, 10) said head module (11) includes a pair of electrical connectors comprising a first electrical connector (22, 23, 24) of the external conductor (8a, 9a, 10a) of the bonding cable (8, 9, 10) incorporated in the dielectric filling material (21) and a second electrical connector (25, 26, 27) of the internal conductor (8b, 9b, 10b) of the bonding cable (8, 9, 10) incorporated in the dielectric filling material (21), and where said tail module (12) comprises a flange (28) provided with electrical connectors (29, 30, 31, 32, 33, 34) short-circuited for grounding the conductors (8a, 9a, 10a, 8b, 9b, 10b) of the bonding cables (8, 9, 10), wherein for each bonding cable (8, 9, 10) said head module (11) has an access through hole (18, 19, 20) of the bonding cable (8, 9, 10) to said gap (17), said access hole (18, 19, 20) being through the front head flange (15) of the head module (11), wherein the first electrical connector (22, 23, 24) and the second electrical connector (25, 26, 27) have respective terminals (22a, 25a, 23a, 26a, 24a, 27a) which extend in respective through holes (38, 39, 40, 41, 42, 43) of said rear head flange (16) of the head module (11), wherein the terminals (29a, 30a, 31a, 32a, 33a, 34a) of the electrical connectors (29, 30, 31, 32, 33, 34) provided in the flange (28) of the tail module (12) are of the opposite type to the terminals (22a, 25a, 23a, 26a, 24a, 27a) of the first and second electrical connectors (22, 23, 24, 25, 26, 27) provided in the rear end flange (16) of the head module (11), wherein said first electrical connector (22, 23, 24) comprises a structural conductor element of mechanical connection (22b, 23b, 24b) between said front head flange (15) and said rear head flange (16) of the head module (11), and wherein said first electrical connector (22, 23, 24) comprises a first bush (22c, 23c, 24c) coaxial to said through hole (18, 19, 20) of said front head flange (15) and a transverse arm (22d, 23d, 24d) connecting said first bush (22c, 23c, 24c) and said structural conductor element (22b, 23b, 24b).

2. The sectioning box (1) according to claim 1, **characterised in that** said structural conductor element (22b, 23b, 24b) extends in direction of the axis (L) of the head module (11) and has an end fixed to the front head flange (15) and an opposite end fixed to the rear head flange (16) of the head module (11).

3. The sectioning box (1) according to any preceding claim, **characterised in that** the arrangement of the pairs of electrical connectors of the head module (11) is symmetrical with respect to said axis (L) of the head module (11).

4. The sectioning box (1) according to any preceding claim, **characterised in that** said front head flange (15) and said rear head flange (16) of the head module (11) are in the form of parallel discs connected orthogonally by said structural conductor element (22b, 23b, 24b) of each pair of electrical connectors of the head module (11).

5. The sectioning box (1) according to the preceding claim, **characterised in that** said second electrical connector (25, 26, 27) comprises a second bush (25b, 26b, 27b) coaxial to said first bush (22c, 23c, 24c).

6. The sectioning box (1) according to any one of the preceding claims, **characterised in that** said modular modules (11, 12, 13, 14) comprise at least one intermediate module (13) interposed between said head module (11) and said tail module (12) and having partial discharge sensors (36) along the conductors (8a, 9a, 10a, 8b, 9b, 10b) of the bonding cables (8, 9, 10).

7. The sectioning box (1) according to any one of the preceding claims, **characterised in that** said modular modules (11, 12, 13, 14) comprise at least one intermediate module (13) interposed between said head module (11) and said tail module (12) and having shield current sensors (36) along the conductors (8a, 9a, 10a, 8b, 9b, 10b) of the bonding cables (8, 9, 10).

8. The sectioning box (1) according to any one of the preceding claims, **characterised in that** said modular modules (11, 12, 13, 14) comprise at least one intermediate module (13) interposed between said head module (11) and said tail module (12) and having recuperators of electricity (36) from the conductors (8a, 9a, 10a, 8b, 9b, 10b) of the bonding cables (8, 9, 10).

9. The sectioning box (1) according to any one of the preceding claims, **characterised in that** said modular modules (11, 12, 13, 14) comprise at least one intermediate module (14) interposed between said head module (11) and said tail module (12) and having surge voltage limiters (37) from the conductors (8a, 9a, 10a, 8b, 9b, 10b) of the bonding cables (8, 9, 10).

## Patentansprüche

1. Trennkasten (1), geeignet zum Trennen einer Kabelabschirmung (2, 3, 4) eines dreiphasigen Hochspannungs-Wechselstromkreises, wobei die Abschirmung jedes Kabels (2, 3, 4) stromaufwärts und stromabwärts ihres Trennpunkts elektrisch mit einem ersten Leiter (8a, 9a, 10a) bzw. mit einem zweiten Leiter (8b, 9b, 10b) verbunden ist, die in einem Bonding-Kabel (8, 9, 10) ineinander angeordnet sind, **dadurch gekennzeichnet, dass** er modulare Module (11, 12, 13, 14) aufweist, die mittels männlicher/weiblicher elektrischer Verbindungssysteme elektrisch miteinander verbunden sind, umfassend wenigstens ein Kopfmodul (11) und ein Endmodul (12), wobei das Kopfmodul (11) einen vorderen Kopf-Flansch (15) und einen hinteren Kopf-Flansch (16) umfasst, die in Richtung einer Achse (L) des Kopfmoduls (11) durch einen Spalt (17) voneinander beabstandet sind, der ein dielektrisches Füllmaterial (21) in fester oder Gelform aufweist, wobei für jedes Bonding-Kabel (8, 9, 10) das Kopfmodul (11) ein Paar elektrischer Steckverbinder umfasst, das einen ersten elektrischen Steckverbinder (22, 23, 24) des äußeren Leiters (8a, 9a, 10a) des Bonding-Kabels (8, 9, 10), eingebettet in das dielektrische Füllmaterial (21), und einen zweiten elektrischen Steckverbinder (25, 26, 27) des inneren Leiters (8b, 9b, 10b) des Bonding-Kabels (8, 9, 10), eingebettet in das dielektrische Füllmaterial (21), umfasst, und wobei das Endmodul (12) einen Flansch (28) mit kurzgeschlossenen elektrischen Steckverbindern (29, 30, 31, 32, 33, 34) zum Erden der Leiter (8a, 9a, 10a, 8b, 9b, 10b) der Bonding-Kabel (8, 9, 10) umfasst, wobei für jedes Bonding-Kabel (8, 9, 10) das Kopfmodul (11) eine Zugangs-Durchgangsöffnung (18, 19, 20) des Bonding-Kabels (8, 9, 10) zu dem Spalt (17) aufweist, wobei sich diese Zugangsöffnung (18, 19, 20) durch den vorderen Kopf-Flansch (15) des Kopfmoduls (11) erstreckt, wobei der erste elektrische Steckverbinder (22, 23, 24) und der zweite elektrische Steckverbinder (25, 26, 27) jeweilige Anschlussenden (22a, 25a, 23a, 26a, 24a, 27a) aufweisen, die sich in jeweilige Durchgangsöffnungen (38, 39, 40, 41, 42, 43) des hinteren Kopf-Flansches (16) des Kopfmoduls (11) erstrecken, wobei die Anschlussenden (29a, 30a, 31a, 32a, 33a, 34a) der elektrischen Steckverbinder (29, 30, 31, 32, 33, 34), die im Flansch (28) des Endmoduls (12) vorgesehen sind, vom entgegengesetzten Typ zu den Anschlussenden (22a, 25a, 23a, 26a, 24a, 27a) des ersten und zweiten elektrischen Steckverbinders (22, 23, 24, 25, 26, 27) sind, die im hinteren Endflansch (16) des Kopfmoduls (11) vorgesehen sind, wobei der erste elektrische Steckverbinder (22, 23, 24) ein strukturelles leitfähiges mechanisches Verbindungselement (22b, 23b, 24b) zwischen dem vorderen Kopf-Flansch (15) und dem hinteren Kopf-Flansch (16) des Kopfmoduls (11) umfasst, und wobei der erste elektrische Steckverbinder (22, 23, 24) eine erste Buchse (22c, 23c, 24c), koaxial zu der Durchgangsöffnung (18, 19, 20) des vorderen Kopf-Flansches (15), und einen Querarm (22d, 23d, 24d) umfasst, der die erste Buchse (22c, 23c, 24c) und das strukturelle leitfähige Verbindungselement (22b, 23b, 24b) verbindet.

2. Trennkasten (1) nach Anspruch 1, **dadurch gekennzeichnet, dass** sich das strukturelle leitfähige Verbindungselement (22b, 23b, 24b) in Richtung der Achse (L) des Kopfmoduls (11) erstreckt und ein an dem vorderen Kopf-Flansch (15) befestigtes Ende sowie ein entgegengesetztes, an dem hinteren Kopf-Flansch (16) des Kopfmoduls (11) befestigtes Ende aufweist.

3. Trennkasten (1) nach einem der vorhergehenden Ansprüche, **dadurch gekennzeichnet, dass** die Anordnung der Paare elektrischer Steckverbinder des Kopfmoduls (11) symmetrisch bezüglich der Achse (L) des Kopfmoduls (11) ist.

4. Trennkasten (1) nach einem der vorhergehenden Ansprüche, **dadurch gekennzeichnet, dass** der vordere Kopf-Flansch (15) und der hintere Kopf-Flansch (16) des Kopfmoduls (11) in Form paralleler Scheiben ausgebildet sind, die orthogonal durch das strukturelle leitfähige Verbindungselement (22b, 23b, 24b) jedes Paars elektrischer Steckverbinder des Kopfmoduls (11) miteinander verbunden sind.

5. Trennkasten (1) nach dem vorhergehenden Anspruch, **dadurch gekennzeichnet, dass** der zweite elektrische Steckverbinder (25, 26, 27) eine zweite Buchse (25b, 26b, 27b) umfasst, die koaxial zu der ersten Buchse (22c, 23c, 24c) ist.

6. Trennkasten (1) nach einem der vorhergehenden Ansprüche, **dadurch gekennzeichnet, dass** die modularen Module (11, 12, 13, 14) wenigstens ein Zwischenmodul (13) umfassen, das zwischen dem Kopfmodul (11) und dem Endmodul (12) angeordnet ist und Teilentladungssensoren (36) entlang der Leiter (8a, 9a, 10a, 8b, 9b, 10b) der Bonding-Kabel (8, 9, 10) aufweist.

7. Trennkasten (1) nach einem der vorhergehenden Ansprüche, **dadurch gekennzeichnet, dass** die modularen Module (11, 12, 13, 14) wenigstens ein Zwischenmodul (13) umfassen, das zwischen dem Kopfmodul (11) und dem Endmodul (12) angeordnet ist und Schirmstromsensoren (36) entlang der Leiter (8a, 9a, 10a, 8b, 9b, 10b) der Bonding-Kabel (8, 9, 10) aufweist.

8. Trennkasten (1) nach einem der vorhergehenden Ansprüche, **dadurch gekennzeichnet, dass** die modularen Module (11, 12, 13, 14) wenigstens ein Zwischenmodul (13) umfassen, das zwischen dem Kopfmodul (11) und dem Endmodul (12) angeordnet ist und Rückgewinnungseinrichtungen für elektrische Energie (36) aus den Leitern (8a, 9a, 10a, 8b, 9b, 10b) der Bonding-Kabel (8, 9, 10) aufweist.

9. Trennkasten (1) nach einem der vorhergehenden Ansprüche, **dadurch gekennzeichnet, dass** die modularen Module (11, 12, 13, 14) wenigstens ein Zwischenmodul (14) umfassen, das zwischen dem Kopfmodul (11) und dem Endmodul (12) angeordnet ist und Überspannungsbegrenzer (37) für die Leiter (8a, 9a, 10a, 8b, 9b, 10b) der Bonding-Kabel (8, 9, 10) aufweist.

## Revendications

1. Boîte de sectionnement (1) adaptée au sectionnement d'un écran de câble (2, 3, 4) d'un circuit électrique triphasé haute tension en courant alternatif, où l'écran de chaque câble (2, 3, 4) est électriquement connecté, en amont et en aval de son point de sectionnement, à un premier conducteur (8a, 9a, 10a) et respectivement à un second conducteur (8b, 9b, 10b) disposés l'un à l'intérieur de l'autre dans un câble de bonding (8, 9, 10), **caractérisée en ce qu'**elle comprend des modules modulaires (11, 12, 13, 14), reliés électriquement au moyen de systèmes d'interconnexion électrique mâle/femelle, comprenant au moins un module de tête (11) et un module de queue (12), le module de tête (11) comprenant une bride frontale de tête (15) et une bride arrière de tête (16) séparées, dans la direction d'un axe (L) du module de tête (11), par un intervalle (17) comportant un matériau de remplissage diélectrique (21) sous forme solide ou gélifiée, où, pour chaque câble de bonding (8, 9, 10), ledit module de tête (11) comprend une paire de connecteurs électriques comprenant un premier connecteur électrique (22, 23, 24) du conducteur externe (8a, 9a, 10a) du câble de bonding (8, 9, 10), incorporé dans le matériau de remplissage diélectrique (21), et un second connecteur électrique (25, 26, 27) du conducteur interne (8b, 9b, 10b) du câble de bonding (8, 9, 10), incorporé dans le matériau de remplissage diélectrique (21), et où ledit module de queue (12) comprend une bride (28) munie de connecteurs électriques (29, 30, 31, 32, 33, 34) mis en court-circuit pour la mise à la terre des conducteurs (8a, 9a, 10a, 8b, 9b, 10b) des câbles de bonding (8, 9, 10), où, pour chaque câble de bonding (8, 9, 10), ledit module de tête (11) comporte un trou traversant d'accès (18, 19, 20) du câble de bonding (8, 9, 10) vers ledit intervalle (17), ledit trou d'accès (18, 19, 20) traversant la bride frontale de tête (15) du module de tête (11), où le premier connecteur électrique (22, 23, 24) et le second connecteur électrique (25, 26, 27) comportent des bornes respectives (22a, 25a, 23a, 26a, 24a, 27a) qui s'étendent dans des trous traversants respectifs (38, 39, 40, 41, 42, 43) de ladite bride arrière de tête (16) du module de tête (11), où les bornes (29a, 30a, 31a, 32a, 33a, 34a) des connecteurs électriques (29, 30, 31, 32, 33, 34) prévus dans la bride (28) du module de queue (12) sont de type opposé aux bornes (22a, 25a, 23a, 26a, 24a, 27a) du premier et du second connecteur électrique (22, 23, 24, 25, 26, 27) prévus dans la bride d'extrémité arrière (16) du module de tête (11), où ledit premier connecteur électrique (22, 23, 24) comprend un élément conducteur structurel de liaison mécanique (22b, 23b, 24b) entre ladite bride frontale de tête (15) et ladite bride arrière de tête (16) du module de tête (11), et où ledit premier connecteur électrique (22, 23, 24) comprend une première douille (22c, 23c, 24c) coaxiale audit trou traversant (18, 19, 20) de ladite bride frontale de tête (15) et un bras transversal (22d, 23d, 24d) reliant ladite première douille (22c, 23c, 24c) et ledit élément conducteur structurel (22b, 23b, 24b).

2. Boîte de sectionnement (1) selon la revendication 1, **caractérisée en ce que** ledit élément conducteur structurel (22b, 23b, 24b) s'étend dans la direction de l'axe (L) du module de tête (11) et comporte une extrémité fixée à la bride frontale de tête (15) et une extrémité opposée fixée à la bride arrière de tête (16) du module de tête (11).

3. Boîte de sectionnement (1) selon l'une quelconque des revendications précédentes, **caractérisée en ce que** l'agencement des paires de connecteurs électriques du module de tête (11) est symétrique par rapport audit axe (L) du module de tête (11).

4. Boîte de sectionnement (1) selon l'une quelconque des revendications précédentes, **caractérisée en ce que** ladite bride frontale de tête (15) et ladite bride arrière de tête (16) du module de tête (11) sont sous la forme de disques parallèles reliés orthogonalement par ledit élément conducteur structurel (22b, 23b, 24b) de chaque paire de connecteurs électriques du module de tête (11).

5. Boîte de sectionnement (1) selon la revendication précédente, **caractérisée en ce que** ledit second connecteur électrique (25, 26, 27) comprend une seconde douille (25b, 26b, 27b) coaxiale à ladite première douille (22c, 23c, 24c).

6. Boîte de sectionnement (1) selon l'une quelconque des revendications précédentes, **caractérisée en ce que** lesdits modules modulaires (11, 12, 13, 14) comprennent au moins un module intermédiaire (13) interposé entre ledit module de tête (11) et ledit module de queue (12) et comportant des capteurs de décharges partielles (36) le long des conducteurs (8a, 9a, 10a, 8b, 9b, 10b) des câbles de bonding (8, 9, 10).

7. Boîte de sectionnement (1) selon l'une quelconque des revendications précédentes, **caractérisée en ce que** lesdits modules modulaires (11, 12, 13, 14) comprennent au moins un module intermédiaire (13) interposé entre ledit module de tête (11) et ledit module de queue (12) et comportant des capteurs de courant d'écran (36) le long des conducteurs (8a, 9a, 10a, 8b, 9b, 10b) des câbles de bonding (8, 9, 10).

8. Boîte de sectionnement (1) selon l'une quelconque des revendications précédentes, **caractérisée en ce que** lesdits modules modulaires (11, 12, 13, 14) comprennent au moins un module intermédiaire (13) interposé entre ledit module de tête (11) et ledit module de queue (12) et comportant des récupérateurs d'électricité (36) à partir des conducteurs (8a, 9a, 10a, 8b, 9b, 10b) des câbles de bonding (8, 9, 10).

9. Boîte de sectionnement (1) selon l'une quelconque des revendications précédentes, **caractérisée en ce que** lesdits modules modulaires (11, 12, 13, 14) comprennent au moins un module intermédiaire (14) interposé entre ledit module de tête (11) et ledit module de queue (12) et comportant des limiteurs de surtension (37) à partir des conducteurs (8a, 9a, 10a, 8b, 9b, 10b) des câbles de bonding (8, 9, 10).
